# FASCICULE DE BREVET EUROPEEN

(11) **EP 0 469 947 B1**
(45) Date de publication et mention de la délivrance du brevet: **27.09.1995**
(21) Numéro de dépôt: 91401979.9
(22) Date de dépôt: 16.07.1991
(51) Int. Cl.: F16C 11/06

(54) **Douille de maintien pour pivot**
Haltebuchse für Kugelgelenk
Ball and socket joint

(30) Priorité: 03.08.1990 IT 6761690
(43) Date de publication de la demande: 05.02.1992
(73) Titulaire: AlliedSignal Automotive Italia Spa, 26013 Crema (IT)
(72) Inventeur: Cadeddu, Leonardo, Bendix Italia S.p.a., I-26013 Crema (IT)
(74) Mandataire: Bentz, Jean-Paul

(56) Documents cités:
- EP-A- 0 165 763
- FR-A- 793 857
- FR-A- 2 369 944

## Description

La présente invention concerne une douille de maintien de la tête sphérique formant pivot d'une tige dans une cavité de forme sensiblement cylindrique.

Une telle douille peut-être mise en oeuvre dans tout système d'accouplement de deux pièces présentant un degré de liberté de pivotement. Par exemple, dans les servomoteurs à dépression utilisés pour assister le freinage des véhicules automobiles, la tige de poussée reliée à la pédale ne se déplace pas rigoureusement dans l'axe du servomoteur. Il est alors nécessaire de prévoir une liaison à pivot entre le piston du servomoteur et la tige de poussée. Ceci est également vrai pour la tige de poussée d'un embrayage ou d'une pompe.

Dans le cas d'un servomoteur d'assistance au freinage, FR-A-2 132 063 décrit l'utilisation d'un contre-pivot en matériau élastomère dont une partie flue à l'intérieur d'une gorge pratiquée dans la cavité lorsque la tête sphérique de la tige de poussée est introduite dans la cavité. Un tel contre-pivot est tout à fait adapté si aucune force sensible d'arrachement n'est appliquée à la tige de poussée.

DE-A-3308042 pallie le problème de l'arrachement au moyen d'un élément de blocage constitué par un collier segmenté. Cette solution reste coûteuse notamment en temps d'assemblage.

EP-A-0 165 763 divulgue un accouplement à pivot selon le préambule de la revendication principale dans lequel la douille, une fois mise en place subit une contrainte et une déformation permanente autour de la tête sphérique d'une tige de poussée, et dans lequel les frottements ne peuvent être maîtrisés que par l'emploi d'un matériau spécifique comme une résine acétal, qui ne résoud pas non plus le problème de l'arrachement.

La présente invention a pour but un accouplement à pivot de la tête sphérique formée à l'extrémité d'une tige dans une cavité, tel que la tige résiste à un effort sensible d'arrachement, la douille équipant cet accouplement devant être, en outre, économique et facile à mettre en place.

Selon l'invention, un tel accouplement est caractérisé en ce que, avant et après mise en oeuvre, la paroi interne de la deuxième partie affecte une forme partiellement sphérique prolongeant celle de la première partie, des fentes longitudinales ouvertes étant pratiquées dans les deuxième et troisième parties, et en ce que la douille est réalisée dans un matériau thermoplastique dur, de sorte que, après mise en oeuvre, l'ensemble constitué de la tête sphérique et de la douille est définitivement prisonnier dans la cavité

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessins est annexée sur laquelle:

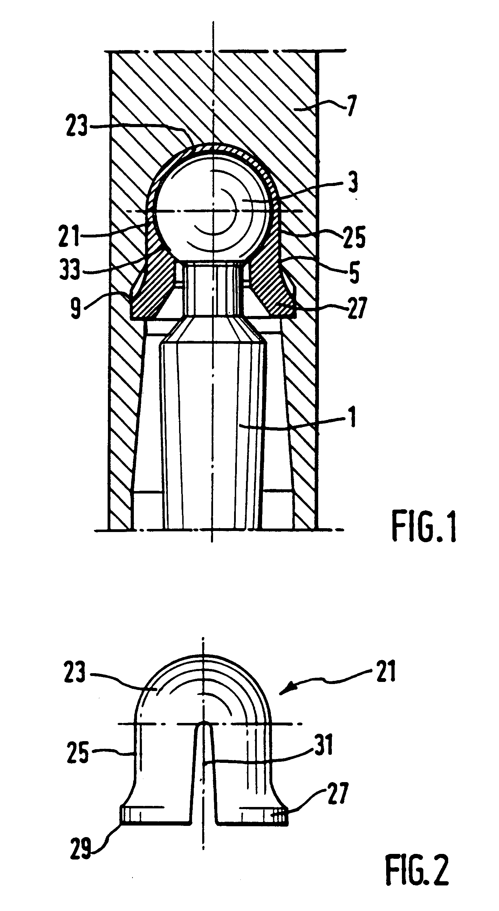

- La Figure 1 représente schématiquement en coupe une douille selon l'invention mise en oeuvre dans un accouplement à pivot, et
- La Figure 2 représente schématiquement vue de l'extérieur une douille avant mise en oeuvre.

En référence maintenant aux Figures, une tige de poussée 1 comporte, à son extrémité, une tête 3 de forme sphérique. Cette tête 3 pénètre dans une cavité 5 prévue par exemple dans un piston 7. Cette cavité 5 a une paroi sensiblement cylindrique et se termine, dans l'exemple représenté, par un fond semi-sphérique.

Une gorge annulaire 9 a été pratiquée dans la partie sensiblement cylindrique de la cavité 5.

La douille 21 a été réalisée dans un matériau thermoplastique dur présentant une certaine élasticité, mais pourrait tout aussi bien être réalisée à partir d'une feuille d'acier fine. Elle comporte essentiellement une première partie 23 de forme semi-sphérique correspondante à celle de la tête 3 de la tige 1 et destinée à recevoir celle-ci. Puis une deuxième partie 25 affecte une forme sensiblement cylindrique en prolongement de la première partie 23. Enfin, une troisième partie 27 affecte une forme sensiblement tronconique dont l'extrémité libre 29 présente un diamètre supérieur à celui de la partie cylindrique de la cavité 5.

Des fentes longitudinales 31, par exemple au nombre de quatre, sont pratiquées dans les deuxième et troisième parties 25, 27 de manière à assurer une possibilité de déformation élastique de l'extrémité ouverte de la douille 21.

Sur l'exemple représenté où la douille est réalisée dans un matériau thermoplastique dur, la paroi intérieure 33 de la deuxième partie 25 de la douille 21 affecte une forme partiellement sphérique prolongeant la première partie 23.

En pratique, la douille 21 est d'abord disposée sur la tête 1 sur laquelle elle s'enclipse naturellement. Puis l'ensemble est introduit dans la cavité, la troisième partie 27 de la douille se déformant élastiquement pour pénétrer dans la cavité 5. En atteignant la gorge annulaire 9, cette troisième partie 27 se détend élastiquement et pénètre dans la gorge.

L'ensemble est alors définitivement prisonnier dans la cavité.

En ajustant de façon judicieuse les dimensions de la cavité, de la tête, de la douille et de la gorge, l'homme de l'art pourra sans difficulté obtenir ainsi un accouplement à pivot minimisant jeux et frottements.

De plus, l'utilisation d'un matériau thermoplastique permet une réalisation extrêmement simple de la douille, et présente, en outre, l'avantage d'éviter les problèmes de corrosion inhérents à l'accouplement de deux pièces métalliques, ainsi que les problèmes de bruits dus aux pièces métalliques qui se heurtent et de présenter une lubrification très durable .

Bien évidemment, de nombreuses modifications pourront être apportées à la présente invention sans sortir du cadre défini par les revendications jointes.

## Revendications

1. Accouplement à pivot d'une tête sphérique (3) formée à l'extrémité d'une tige (1) dans une cavité (5) de forme sensiblement cylindrique présentant un fond semi-sphérique et une gorge annulaire (9), une douille de maintien (21) étant disposée entre la tête sphérique (3) et la cavité (5), la douille (21) étant constituée d'une première partie (23) de forme semi-sphérique adaptée à ladite tête sphérique (3), une deuxième partie (25) de forme cylindrique adaptée à la forme de ladite cavité (5), et une troisième partie (27) de forme sensiblement tronconique dont l'extrémité libre (29) présente un diamètre supérieur à celui de ladite cavité (5), caractérisé en ce que, avant et après mise en oeuvre, la paroi interne (33) de la deuxième partie (25) affecte une forme partiellement sphérique prolongeant celle de la première partie (23), des fentes longitudinales ouvertes (31) étant pratiquées dans les deuxième (25) et la troisième (27) parties, et en ce que la douille (21) est réalisée dans un matériau thermoplastique dur, de sorte que, après mise en oeuvre, l'ensemble constitué de la tête sphérique (3) et de la douille (21) est définitivement prisonnier dans la cavité (5).

## Claims

1. Pivot coupling of a spherical head (3) formed at the end of a rod (1) in a cavity (5) of substantially cylindrical shape having a hemispherical bottom and an annular groove (9), a retaining socket (21) being arranged between the spherical head (3) and the cavity (5), the socket (21) consisting of a first part (23) of hemispherical shape matched to said spherical head (3), a second part (25) of cylindrical shape matched to the shape of said cavity (5) and a third part (27) of substantially frustoconical shape, the free end (29) of which has a dismeter larger than that of said cavity (5), characterized in that, before and after implementation, the inner wall (33) of the second part (25) assumes a partially spherical shape prolonging that of the first part (23), open longitudinal slots (31) being made in the second (25) and third (27) parts, and in that the socket (21) is produced from a hard thermoplastic, so that, after implementation, the assembly consisting of the spherical head (3) and of the socket (21) is permanently captive in the cavity (5).

## Patentansprüche

1. Gelenkige Kopplung eines an dem Ende einer Stange (1) gebildeten kugelförmigen Kopfes (3) mit einem im wesentlichen zylinderförmigen Hohlraum (5), der einen halbkugelförmigen Boden sowie eine ringförmige Nut (9) aufweist, wobei zwischen dem kugelförmigen Kopf (3) und dem Hohlraum (5) eine Haltebuchse (21) angeordnet ist, wobei die Buchse (21) gebildet ist durch einen ersten Teil (23) mit halbkugelförmiger Gestalt, die an den kugelförmigen Kopf (3) angepaßt ist, einen zweiten Teil (25) mit kegelstumpfförmiger Gestalt, die an die Gestalt des Hohlraumes (5) angepaßt ist, und einen dritten Teil (27) mit im wesentlichen kegelstumpfförmiger Gestalt, dessen freies Ende (29) einen größeren Durchmesser als der Hohlraum (5) aufweist, dadurch gekennzeichnet, daß vor und nach dem Verwenden die Innenwand (33) des zweiten Teils (25) eine teilweise kugelförmige Gestalt aufweist, welche die Gestalt des ersten Teils (23) verlängert, wobei in dem zweiten Teil (25) und dem dritten Teil (27) offene Längsschlitze (31) ausgebildet sind, und daS die Buchse (21) aus einem harten thermoplastischem Material gebildet ist, so daß nach dem Verwenden die durch den kugelförmigen Kopf (3) und die Buchse (21) gebildete Baugruppe sicher in dem Hohlraum (5) eingeschlossen ist.
